# EUROPEAN PATENT APPLICATION

(11) **EP 3 521 906 A1**
(43) Date of publication of application: **07.08.2019**
(21) Application number: 17855857.3
(22) Date of filing: 20.09.2017
(51) Int. Cl.: G02C 7/06, G02B 3/14, G02C 7/08, G02F 1/13

(54) **LENS, LENS BLANK, AND EYEWEAR**

(30) Priority: 29.09.2016 JP 2016191870
(71) Applicant: Mitsui Chemicals, Inc., Minato-ku Tokyo 105-7122 (JP)
(72) Inventor: OKADA, Yoshinobu, Aichi 457-8522 (JP); HIKOSAKA, Eiichiro, Aichi 457-8522 (JP); MURAMATSU, Akihiro, Aichi 457-8522 (JP)
(74) Representative: Epping - Hermann - Fischer
(86) International application number: PCT/JP2017/033821
(87) International publication number: WO 2018/061902

(57) **Abstract**

The present invention provides a lens that suppresses narrowing of the field of view. A lens 12 is provided with a lens body. The lens body is provided with a Fresnel lens part in which a plurality of protruding parts 64 and recessed parts 66 that constitute at least parts of a plurality of concentric circles are formed. In addition, a diffracting part 60 has a horizontally elongated outer shape when viewed in a direction in which light is incident on the lens body, and at least parts of first outer peripheral edges of the diffracting part 60 located at both ends in a longitudinal direction (a right edge 70C and left edge 70D of an outer peripheral edge 70) form circular arcs that extend along concentric circles. Furthermore, second outer peripheral edges of the diffracting part 60 that are located at both ends in a lateral direction (an upper edge 70A and lower edge 70B of the outer peripheral edge 70) are located inward from a concentric circle that includes circular arcs formed by parts of the first outer peripheral edges, and are connected to parts of the first outer peripheral edges forming the circular arcs via curved parts 80.

## Description

### Technical Field

The present invention relates to a lens, a lens blank, and an eyewear.

### Background Art

Japanese Patent Application Laid-Open No. 2011-516927 (hereinafter, referred to as "Patent Literature ('PTL' for short) 1") and US Patent Application Publication No. 2013/0114128 (hereinafter, referred to as "PTL 2") each disclose a lens of an eyewear and a lens blank from which the lens is formed. In the lens disclosed in PTL 1, the focal length of a partial region of the lens can be changed, and in the lens disclosed in PTL 2, the focal length of a partial region of the lens is different from that of the other region. These lenses provide better visibility (expand visibility) at the time when a user wearing the eyewear provided with the lens disclosed in each of the references views an object at a close distance from the user through such a partial region of the lens.

### Citation List

### Patent Literature

PTL 1
   Japanese Patent Application Laid-Open No. 2011-516927
PTL 2
   US Patent Application Publication No. 2013/0114128

### Summary of Invention

### Technical Problem

In the meantime, there is room for improvement of each of the lenses disclosed in PTL 1 and PTL 2 in reducing visual field narrowing at the time when the user views a target object through the partial region of the lens.

In view of the above, the present invention aims to obtain a lens, a lens blank, and an eyewear which can suppress the visual field narrowing.

### Solution to Problem

In Embodiment 1 of a lens of the present invention, the lens includes: a lens body; and a Fresnel lens portion provided in the lens body, the Fresnel lens portion being a portion in which a plurality of protrusions and depressions are formed, the plurality of protrusions and depressions forming at least a part of a plurality of concentric circles. In the lens, the Fresnel lens portion as seen in a direction in which light enters the lens body has a laterally-elongated external shape, at least a part of first peripheral edges of the Fresnel lens portion forms a circular arc along one of the plurality of concentric circles, the first peripheral edges are positioned at both edges of the Fresnel lens portion in a longitudinal direction of the Fresnel lens portion, second peripheral edges of the Fresnel lens portion are positioned inside the one of the plurality of concentric circles which includes the circular arc formed by the part of the first peripheral edges, and the second peripheral edges are positioned at both edges of the Fresnel lens portion in a transverse direction of the Fresnel lens portion and are connected, via a bent portion, to the part of the first peripheral edges forming the circular arc.

Additionally, according to the lens of Embodiment 1, the plurality of protrusions and the plurality of depressions are formed in the Fresnel lens portion provided in the lens body, and the protrusions and the depressions form at least a part of the plurality of concentric circles. Here, the Fresnel lens portion is formed in a laterally-elongated shape in the lens of Embodiment 1. This shape makes it possible to suppress visual field narrowing in the longitudinal direction of the Fresnel lens portion. Additionally, in the lens of Embodiment 1, at least a part of the first peripheral edges of the Fresnel lens portion which are positioned at the both edges of the Fresnel lens portion in the longitudinal direction forms a circular arc along one of the plurality of concentric circles. Moreover, the second peripheral edges of the Fresnel lens portion which are positioned at the both edges of the Fresnel lens portion in the transverse direction are positioned inside the one of the plurality of concentric circles which includes the circular arc formed by the part of the first peripheral edges, and the second peripheral edges are connected, via the bent portion, to the part of the first peripheral edges forming the circular arc. With this structure, it is possible to optically continuously configure the circular arc formed by the part of the first peripheral edges. Consequently, it is possible to suppress an optical distortion arising in the peripheral edge of the Fresnel lens portion, so as to suppress the visual field narrowing in the longitudinal direction of the Fresnel lens portion.

A lens of Embodiment 2 is the lens of Embodiment 1, in which each of the second peripheral edges has the shape along a straight line or a curve.

A lens of Embodiment 3 is the lens of Embodiment 2, in which the second peripheral edges are formed to cross the plurality of concentric circles to which circular arcs formed by the plurality of protrusions and depressions belong.

According to the lenses of Embodiments 2 and 3, the second peripheral edges that are the both edges of the Fresnel lens portion in the transverse direction are formed as described above, so that a desired visual field of the Fresnel lens portion in the transverse direction can be obtained and the visual field narrowing in the longitudinal direction of the Fresnel lens can be suppressed.

A lens of Embodiment 4 is any one of the lenses of Embodiments 1 to 3, in which the one of the plurality of concentric circles including the circular arc formed by the part of the first peripheral edges is a largest circle among the plurality of concentric circles included in the Fresnel lens portion.

According to the lens of Embodiment 4, the one of the plurality of concentric circles including the circular arc formed by the part of the first peripheral edges which are the both edges of the Fresnel lens portion in the longitudinal direction is the largest circle among the plurality of concentric circles included in the Fresnel lens portion, so that the visual field narrowing in the longitudinal direction of the Fresnel lens portion can further be suppressed.

A lens of Embodiment 5 is any one of the lenses of Embodiments 1 to 4, in which the Fresnel lens portion includes a refractive index changing portion whose refractive index changes when the refractive index changing portion is energized.

According to the lens of Embodiment 5, when the refractive index changing portion provided in the Fresnel lens portion is energized, the refractive index of the refractive index changing portion changes. Then, in the lens of Embodiment 5, it is possible to suppress an optical distortion arising in the peripheral edge of the Fresnel lens portion, so as to suppress the visual field narrowing caused via the Fresnel lens portion and the refractive index changing portion.

A lens of Embodiment 6 is the lens of Embodiment 5, in which the refractive index changing portion is a liquid crystal.

According to the lens of Embodiment 6, the visual field narrowing caused via the Fresnel lens portion and the liquid crystal can be suppressed.

A lens of Embodiment 7 is any one of the lenses of Embodiments 1 to 6, in which a peripheral edge of the Fresnel lens portion is provided with a plurality of portions respectively forming circular arcs along the one of the plurality of concentric circles.

According to the lens of Embodiment 7, the peripheral edge of the Fresnel lens portion is provided with the plurality of portions respectively forming the circular arcs along the one of the plurality of concentric circles, so that it is possible to suppress the number of places in the peripheral edge of the Fresnel lens portion at which the visual field narrowing occurs.

A lens of Embodiment 8 is the lens of Embodiment 7, in which the plurality of portions respectively forming the circular arcs along the one of the plurality of concentric circles are positioned on the same circle.

According to the lens of Embodiment 8, the plurality of portions of peripheral edge of the Fresnel lens portion respectively forming the circular arcs are positioned on the same circle, so that it is possible to suppress an optical distortion arising at positions at the same distance from the center of the Fresnel lens portion (center of the plurality of concentric circles), so as to suppress the visual field narrowing in the longitudinal direction of the Fresnel lens portion.

A lens of Embodiment 9 is the lens of Embodiment 8, in which the plurality of portions respectively forming the circular arcs along the one of the plurality of concentric circles are disposed opposite in pairs relative to the center of the plurality of concentric circles.

According to the lens of Embodiment 9, the plurality of portions of peripheral edge of the Fresnel lens portion respectively forming the circular arcs are positioned on the same circle and, in addition, are disposed opposite in pairs relative to the center of the plurality of concentric circles. With this configuration, it is possible to suppress an optical distortion arising at positions which are at the same distance from the center of the Fresnel lens portion and which are opposite each other with the center of the Fresnel lens portion interposed therebetween.

A lens of Embodiment 10 is the lens of Embodiment 1, in which the Fresnel lens portion has a substantially barrel-like external shape.

According to the lens of Embodiment 10, the Fresnel lens portion is formed in a substantially barrel-like external shape, so that it is possible to suppress the visual field narrowing in the transverse direction of the Fresnel lens portion.

A lens of Embodiment 11 is the lens of Embodiment 1, in which the Fresnel lens portion has a size in the transverse direction gradually increasing toward a central portion of the Fresnel lens portion in the longitudinal direction.

According to the lens of Embodiment 11, the Fresnel lens portion is configured to have a size in the transverse direction gradually increasing toward the central portion of the Fresnel lens portion in the longitudinal direction, so that it is possible to suppress the visual field narrowing in the transverse direction of the Fresnel lens portion.

A lens of Embodiment 12 is the lens of Embodiment 1, in which the longitudinal direction is a horizontal direction in a state where the lens is used, and the transverse direction is a vertical direction in the state where the lens is used.

According to the lens of Embodiment 12, the longitudinal direction is set as a horizontal direction in a state where the lens is used, and the transverse direction is set as a vertical direction in the state where the lens is used, so that it is possible to suppress the visual field narrowing of the Fresnel lens portion.

A lens blank of the present invention is a lens blank for the lens of any one of Embodiments 1 to 12, and includes a blank body, and the Fresnel lens portion provided in the blank body.

According to the lens blank of the present invention, it is possible to suppress the visual field narrowing of the Fresnel lens portion of the lens formed using the lens blank.

An eyewear of Embodiment 1 of the present invention includes a frame to be worn by a user, and the lens according to any one of Embodiments 1 to 12 supported by the frame.

According to the eyewear of Embodiment 1, it is possible to suppress the visual field narrowing at the time when the user using the eyewear views a target object through the Fresnel lens portion of the lens supported by the frame.

Embodiment 2 of the eyewear is the eyewear of Embodiment 1, in which the Fresnel lens portion of the lens includes the refractive index changing portion whose refractive index changes when the refractive index changing portion is energized, the eyewear further includes a controller that is to be attached to the frame and that controls the refractive index changing portion, and the eyewear has a function of changing a focal length of the lens.

According to the eyewear of Embodiment 2, the refractive index in the refractive index changing portion can be changed by control by the controller. Thus, the diopter of the Fresnel lens portion in the lens can be changed.

### Advantageous Effects of Invention

A lens, a lens blank, and an eyewear according to the present invention have an excellent effect that the visual field narrowing can be suppressed.

### Brief Description of Drawings

FIG. 1 is an exploded perspective view illustrating exploded electronic glasses of an embodiment of the present invention;
FIG. 2 is a front view of the electronic glasses of the present embodiment;
FIG. 3 is a front view of a lens cut from a lens blank;
FIG. 4 is an enlarged sectional view illustrating the enlarged section of the lens taken along line 4-4 indicated in FIG. 3;
FIG. 5 is a front view schematically illustrating a Fresnel lens portion of the lens illustrated in FIG. 3;
FIG. 6 is a sectional view of a liquid crystal and the like in a non-energized state;

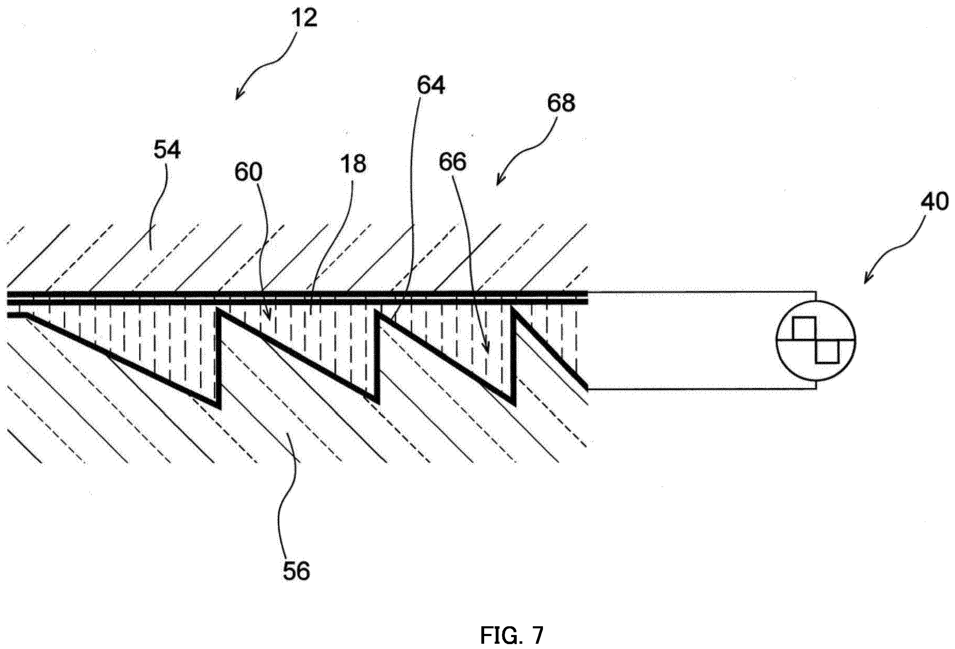

FIG. 7 is a sectional view corresponding to FIG. 6 in which the liquid crystal and the like in an energized state is illustrated;
FIG. 8 is a front view corresponding to FIG. 5 in which a Fresnel lens portion according to Modification 1 is schematically illustrated;
FIG. 9 is a front view corresponding to FIG. 5 in which a Fresnel lens portion according to Modification 2 is schematically illustrated; and
FIG. 10 is a front view corresponding to FIG. 5 in which a Fresnel lens portion according to Modification 3 is schematically illustrated.

### Description of Embodiments

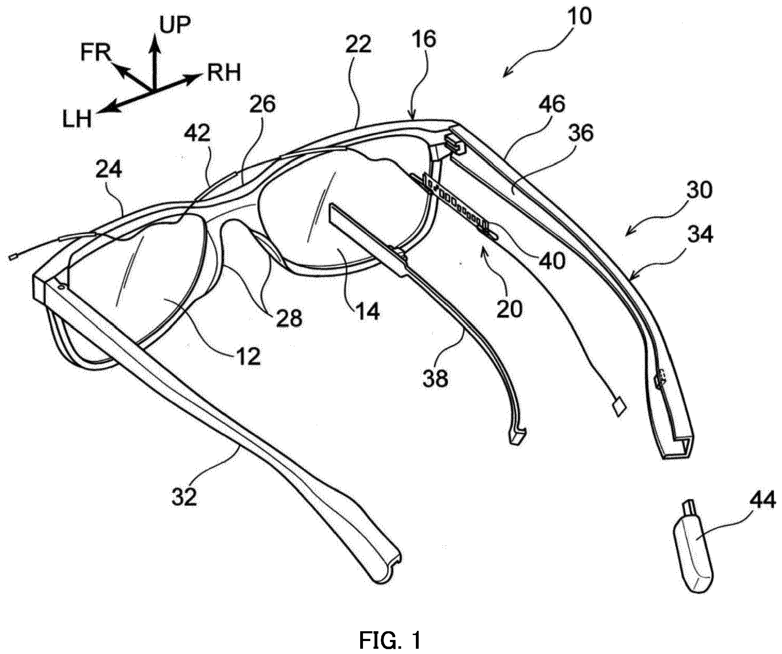

Electronic glasses as an eyewear according to an embodiment of the present invention will be described with reference to FIGS. 1 to 5. Note that, arrows FR, UP, RH, and LH as appropriately illustrated in the figures denote the front side, the upper side, the right-hand side, and the left-hand side, respectively, as seen from a user wearing the electronic glasses. Note also that, unless otherwise specified, the front and back direction, the upper and lower direction, and the right and left direction appearing in the following descriptions are to denote the front and back side, the upper and lower side, and the left and right side, respectively, as seen from the user of the electronic glasses.

Note also that, the upper and lower direction of the lens is the vertical direction or the top and bottom direction in a state where the lens is used, and the right and left direction is interchangeable with the horizontal direction.

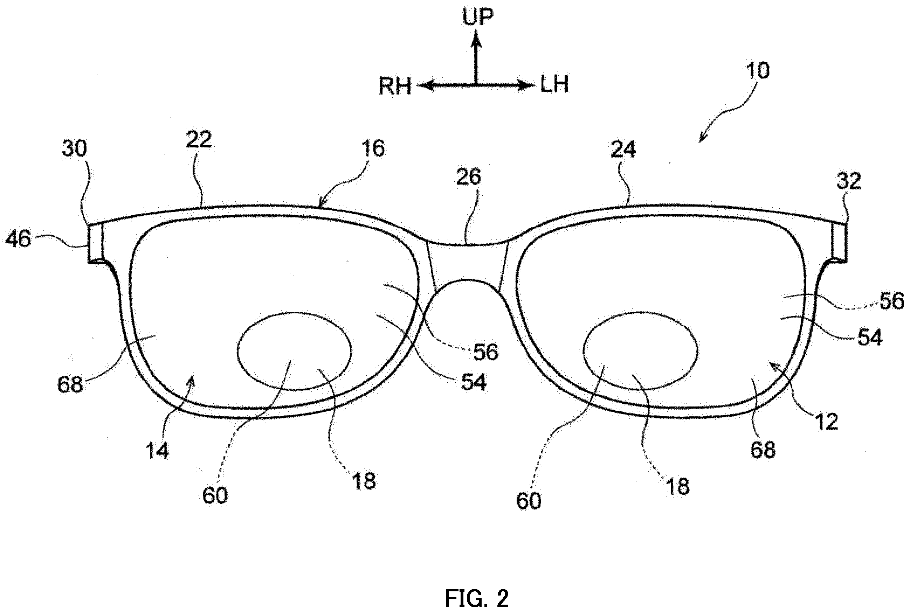

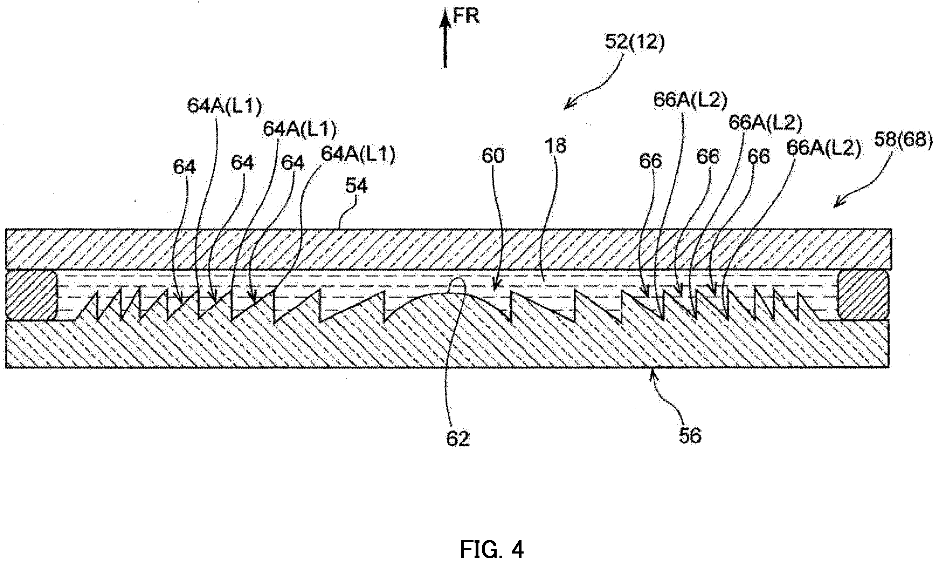

As illustrated in FIGS. 1 and 2, in electronic glasses 10 of the present embodiment, the focal lengths (diopters) of parts of left and right lenses 12 and 14 can be changed by the user performing switching operation. Specifically, electronic glasses 10 include frame 16 to be worn by the user, a pair of left and right lenses 12 and 14 supported by frame 16, and liquid crystal driving part 20 as a controller that drives liquid crystals 18 (see FIG. 4) provided in lenses 12 and 14.

Frame 16 includes right rim 22 and left rim 24 by which right and left lenses 14 and 12 are supported, respectively, and which are formed annularly in front view (as seen from the front side of the user of electronic glasses 10), and bridge 22 connecting right rim 22 to left rim 24 in the left and right direction. Additionally, pad portions 28 to be supported by the nose of the user are formed on portions of right and left rims 22 and 24 contiguous to bridge 26. Moreover, frame 16 includes right temple 30 tiltably attached to the right end of right rim 22 and left temple 32 tiltably attached to the left end of left rim 24. As illustrated in FIG. 1, right temple 30 is configured to include right temple body 34 including groove 36 open on the user side, and lid portion 38 to be attached to right temple body 34 so as to close groove 36 formed in right temple body 34.

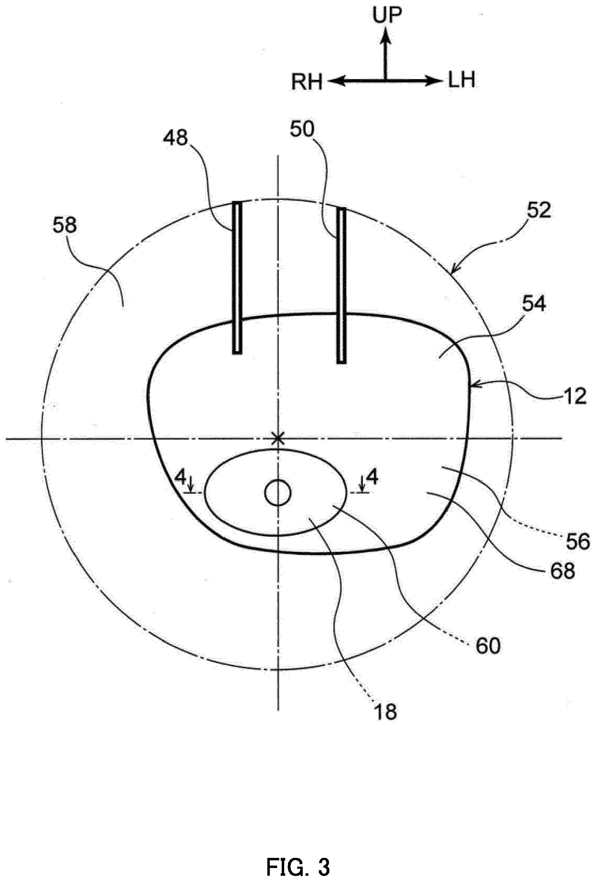

Liquid crystal driving part 20 is for changing the array of liquid crystal 18 provided in lens 12 as described below, and this liquid crystal driving part 20 includes control module 40, and, flexible cable 42, battery 44, and switch 46 connected to control module 40. Control module 40 is disposed in groove 36 of right temple body 34 so as not to be exposed on the user side after lid portion 38 is attached to right temple body 34. Additionally, switch 46 is fixed to right temple body 34 on the side facing away from the user (the side opposite the side on which groove 36 is formed). Note that, switch 46 in the present embodiment is a capacitive touch switch that allows the user to perform switching operation by touching switch 46. In addition, battery 44 is configured to be detachably attached to the rear end of right temple 30. Flexible cable 42 is wired from control module 40 disposed in right temple 30, through an upper portion of right rim 22, bridge 26, and an upper portion of left rim 24. Left and right lenses 12 and 14 are fixed to (fitted into) left rim 24 and right rim 22, respectively, so that liquid crystal 18 provided in lens 12 is connected to flexible cable 42 via electrodes 48 and 50 (see FIG. 3).

Next, lenses 12 and 14 that are principal parts of the present embodiment will be described. Note that, since right lens 14 and left lens 12 are formed symmetrically, the following description will be given in respect of left lens 12, the same parts between left and right lenses 12 and 14 are provided with the same reference signs, and the descriptions of such parts of right lens 14 are omitted.

As illustrated in FIG. 3, lens 12 is formed in a predetermined shape by machining lens blank 52 whose outer edge is circular in front view.

As illustrated in FIGS. 3 and 4, lens blank 52 includes blank body 58 including front lens 54 and diffraction-part-provided lens 56 which are stacked and joined in their thickness direction. Front lens 54 and diffraction-part-provided lens 56 forming a part of this blank body 58 are gently bent so as to convex frontward. In addition, front lens 54 is joined via an adhesion layer (not illustrated) to a portion of diffraction-part-provided lens 56 other than a portion in which diffraction part 60 described below is provided. Note that, the above-mentioned electrodes 48 and 50 are disposed in this adhesion layer.

Diffraction part 60 as the Fresnel lens portion is provided in a part of diffraction-part-provided lens 56, and this diffraction part 60 is configured as a so-called Fresnel lens whose cross section is serrated on the side of front lens 54 (front side). To be more specific, central spherical portion 62 which has the shape of a hemispherical surface and which is disposed at the center of diffraction part 60, and a plurality of protrusions 64 and a plurality of depressions 66 formed around central spherical portion 62 are formed in the front surface of diffraction part 60. Additionally, a plurality of protrusions 64 and a plurality of depressions 66 are disposed alternately along the direction away from central spherical portion 62. Moreover, lines L1 respectively corresponding to tips 64A of protrusions 64 in the protruding direction are formed in the shape of circular arcs about central spherical portion 62 in front view (as seen in the thickness direction of lens blank 52 and in the direction in which light enters lens 12), and lines L2 respectively corresponding to bottoms 66A of depressions 66 in the depressed direction are formed in the shape of circular arcs about central spherical portion 62. In addition, the radii of lines L1 respectively corresponding to tips 64A of protrusions 64 in the protruding direction and of lines L2 respectively corresponding to bottoms 66A of depressions 66 in the depressed direction increase with increasing distance from central spherical portion 62. In other words, L1 and L2 form parts of the circular arcs about the central point of central spherical portion 62. Depressions 66 may also be considered to be groove-like.

Note that, the word "circle" refers to a true circle or a perfect circle in the following description. Note also that, the term "concentric circle" refers to at least one of two or more circles having the center at the same position.

As illustrated in FIG. 4, liquid crystal 18 as the refractive index changing portion whose refractive index changes when liquid crystal 18 is energized is interposed between diffraction part 60 of diffraction-part-provided lens 56 and front lens 54 described above.

As illustrated in FIG. 3, lens 12 is formed by machining lens blank 52 such that lens 12 corresponds in shape to left rim 24 (see FIG. 1). Note that, lens body 68 of lens 12 corresponds to blank body 58 of lens blank 52.

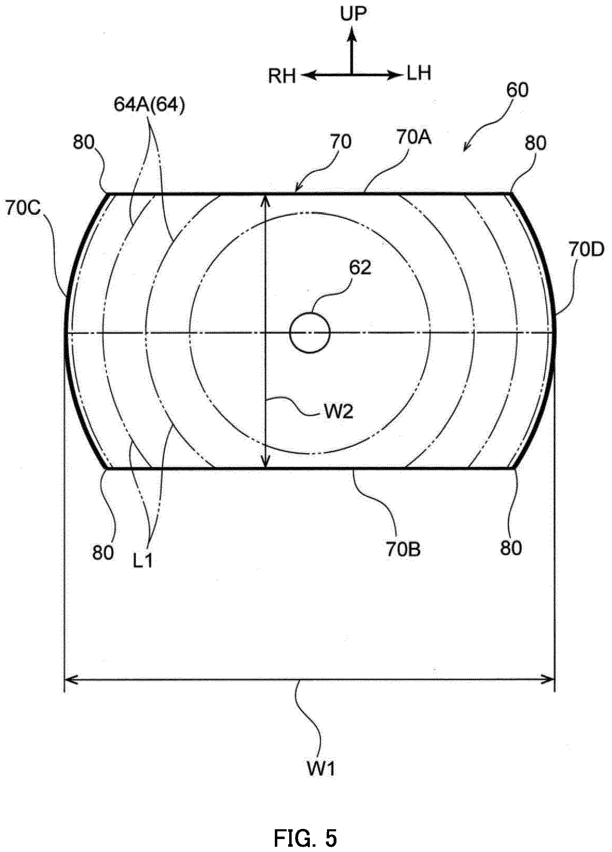

Here, FIG. 5 illustrates a front view schematically illustrating diffraction part 60 provided in lens 12. Note that, peripheral edge 70 of diffraction part 60 is represented by the black thick line, and lines L1 respectively corresponding to tips 64A of protrusions 64 in the protruding direction are indicated by the two-dot chain line. Note also that, in the present embodiment, diffraction part 60 is formed in the shape of a laterally-elongated rectangle in which size W1 of diffraction part 60 in the left and right direction is greater than size W2 in the upper and lower direction. Additionally, upper edge 70A and lower edge 70B as the second peripheral edges of peripheral edge 70 of diffraction part 60 extend parallel to each other along the left and right direction, and these upper and lower edges 70A and 70B cross lines L1 respectively corresponding to tips 64A of protrusions 64 in the protruding direction and lines L2 respectively corresponding to bottoms 66A of depressions 66 in the depressed direction (see FIG. 4). Right edge 70C and left edge 70D as the first peripheral edges of peripheral edge 70 of diffraction part 60 are formed along those of protrusions 64 which are at the farthest distance from central spherical portion 62. Upper and lower edges 70A and 70B of peripheral edge 70 are positioned inside a virtual concentric circle including the circular arcs formed by right and left edges 70C and 70D. Note that, right and left edges 70C and 70D of peripheral edge 70 of diffraction part 60 may also be formed along those of depressions 66 which are at the farthest distance from central spherical portion 62.

In diffraction part 60 described above, right and left edges 70C and 70D of peripheral edge 70 of diffraction part 60 in the horizontal direction (left and right direction) and upper and lower edges 70A and 70B in the vertical direction (upper and lower direction) are connected to one another via bent portions 80. Here, the edges of peripheral edge 70 are formed by surfaces, respectively, and these surfaces are connected to one another at bent portions 80.

### (Function and Effect of Present Embodiment)

Next, a function and effect of the present embodiment will be described.

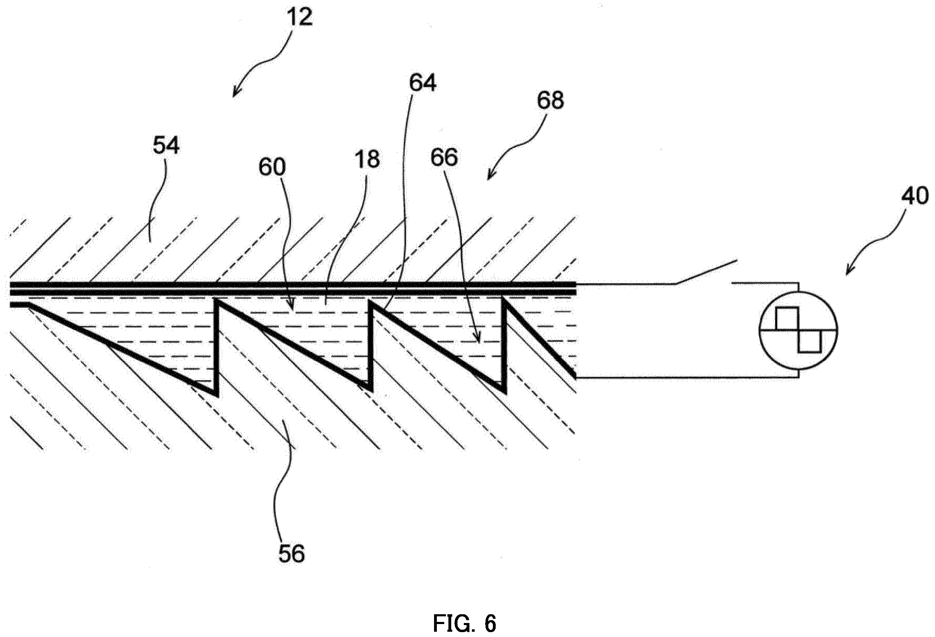

In a state where the user wears electronic glasses 10 illustrated in FIGS. 1 and 2, but has not performed the operation of switch 46, no voltage is applied to liquid crystal 18 as illustrated in FIG. 6. Here, the refractive index of liquid crystal 18 in the state where no voltage is applied is substantially the same as front lens 54 and diffraction-part-provided lens 56. Accordingly, the diopters of portions of left and right lenses 12 and 14 in which diffraction parts 60 are provided are substantially the same as the diopters of portions around diffraction parts 60.

When a voltage is applied to liquid crystals 18 by the user of electronic glasses 10 performing the operation of switch 46, the arrays of liquid crystals 18 are changed and the refractive indices of the liquid crystals 18 change. Accordingly, the diopters of the portions of left and right lenses 12 and 14 in which diffraction parts 60 are provided become greater than the diopters of the portions around diffraction parts 60 (the focal lengths at the portions in which diffraction parts 60 are provided become shorter than the focal lengths at the portions around diffraction parts 60).

Here, in the present embodiment, size W1 of diffraction part 60 in the left and right direction is set to a size greater than size W2 in the upper and lower direction as illustrated in FIG. 5. This configuration makes it possible to suppress the visual field narrowing in the left and right direction of diffraction part 60 in lenses 12 and 14. In addition, right and left edges 70C and 70D of peripheral edge 70 of diffraction part 60 are formed along those of protrusions 64 which are at the farthest distance from the center of central spherical portion 62 in the present embodiment. That is, right and left edges 70C and 70D form the circular arcs of the largest circle among the concentric circles which are formed by protrusions 64 and which are included in diffraction part 60 (the term "circular arc" as used in this context includes not only a circular arc of the whole circle but also a circular arc of a part of the circle). It can also be said in other words that right and left edges 70C and 70D respectively form circular arc portions of the same circle among the circles having central spherical portion 62 as its center. Accordingly, it is possible to configure right and left edges 70C and 70D of peripheral edge 70 of the diffraction part optically continuously along the upper and lower direction of right and left edges 70C and 70D. Consequently, the visual field narrowing in the left and right direction of diffraction part 60 can be suppressed further.

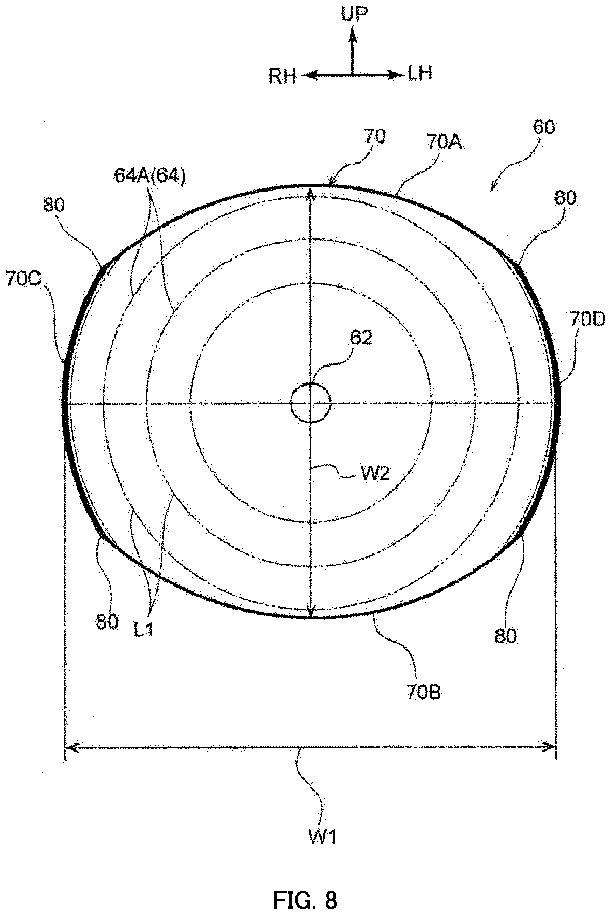

Note that, although upper and lower edges 70A and 70B of peripheral edge 70 of diffraction part 60 are each formed in a straight line extending parallel to the other in the left and right direction in the present embodiment, the present invention is not limited to the embodiment. For example, each of upper and lower edges 70A and 70B formed in a straight line in FIG. 5 may also be formed in a curve. This example is illustrated in FIG. 8. In FIG. 8, upper edge 70A of peripheral edge 70 of diffraction part 60 is formed in a curve curving convexly upward, and lower edge 70B of peripheral edge 70 of diffraction part 60 is formed in a curve curving convexly downward. In this case, edges 70A and 70B which are the curves curving convexly are formed to be positioned inside the virtual concentric circle including the circular arcs formed by right and left edges 70C and 70D. Note that, size W2 of diffraction part 60 in the upper and lower direction may increase toward the central portion in the left and right direction. With this configuration, in comparison to diffraction part 60 illustrated in FIG. 5, the visual field narrowing in the upper and lower direction of diffraction part 60 can be suppressed.

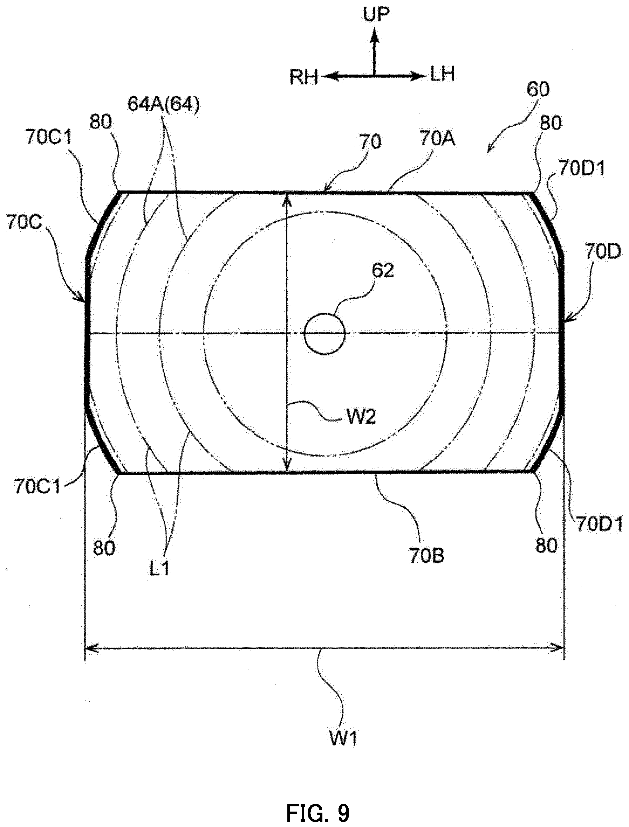

Additionally or alternatively, as in diffraction part 60 illustrated in FIG. 9, opposite portions 70C1 of right edge 70C of peripheral edge 70 of diffraction part 60 which are on opposite sides in the upper and lower direction and opposite portions 70D1 of left edge 70D of peripheral edge 70 of diffraction part 60 which are on opposite sides in the upper and lower direction may be formed in circular arcs along those of protrusions 64 which are at the farthest distance from the center of central spherical portion 62. In this case, opposite portions 70C1 as parts of the right edge and opposite portions 70D1 as parts of the left edge form the circular arcs of the largest circle among the concentric circles which are formed by protrusions 64 and which are included in diffraction part 60 (the term "circular arc" as used in this context includes not only a circular arc of the whole circle but also a circular arc of a part of the circle). As understood, only a part of diffraction part 60 for which reduction in visual field narrowing is desired may be formed in a circular arc as described above.

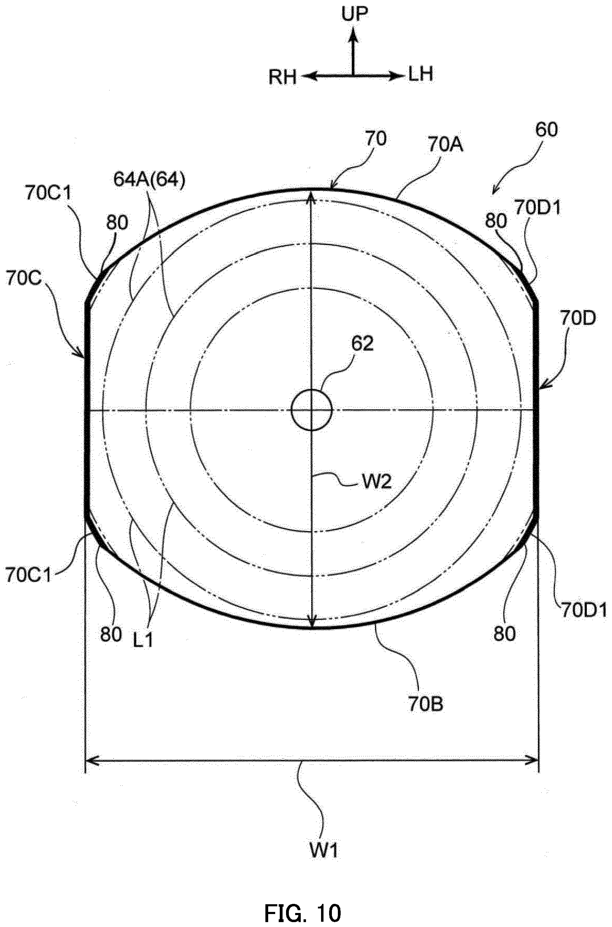

Note that, although edges 70A, 70B, 70C, and 70D are formed in straight lines in FIG. 9, these edges may also be formed in curves curving outward or inward. In FIG. 10 in the same way as in FIG. 9, opposite portions 70C1 as parts of the right edge and opposite portions 70D1 as parts of the left edge are formed in circular arcs along those of protrusions 64 which are at the farthest distance from the center of central spherical portion 62, and edges 70C and 70D are formed in straight lines. Meanwhile, edges 70A and 70B are formed in curves curving outward. In this case, edges 70A, 70B, 70C, and 70D are formed to be positioned inside the virtual concentric circle including the circular arcs formed by portions 70C1 and 70D1. Further, a desired visual field of diffraction part 60 may be obtained by combining the configurations of diffraction parts 60 illustrated in FIGS. 8 and 9, as illustrated in FIG. 10.

As understood from diffraction parts 60 of various shapes illustrated in FIGS. 5 and 8 to 10, at least the whole or a part of the right and left edges of peripheral edges 70 of diffraction part 60 in the horizontal direction (left and right direction) forms a part of circular arc of the largest concentric circle among a plurality of concentric circles included in diffraction part 60, and upper and lower edges 70A and 70B of peripheral edge 70 of diffraction part 60 in the vertical direction are formed in straight lines or in curves inside the aforementioned circular arc of the largest concentric arc. With this configuration, diffraction parts 60 have laterally-elongated shapes as illustrated in FIGS. 5 and 8 to 10. Diffraction parts 60 in FIGS. 5 and 9 each have a substantially rectangular shape similar to a rectangle, and diffraction parts 60 in FIGS. 8 and 10 each have a barrel-like shape. The term "laterally-elongated shape" means a shape at least including these substantially rectangular shape and barrel-like shape. Such shapes can ensure that the visual field in the horizontal direction (left and right direction) is obtained in diffraction part 60. Additionally, the whole or a part of right and left edges 70C and 70D in the horizontal direction (left and right direction) are formed by parts of the circular arcs of the concentric circles included in diffraction part 60, so that it becomes easy to fill diffraction part 60 with liquid crystal 18. Further, the upper and lower outer peripheries in the vertical direction are formed in straight lines or in curves inside the circular arcs of the concentric circle formed by the whole or a part of the outer peripheries in the horizontal direction, so that the size of the diffraction part in the vertical direction is smaller and, accordingly, the visual field of a lens portion other than a diffraction part can be secured even in the case of a laterally-elongated glasses frame.

Although, concerning those peripheral edges among right and left edges 70C and 70D in the horizontal direction (left and right direction) which form parts of the circular arcs of the largest concentric circle, an example has been described in which such parts of the circular arcs of the largest concentric circle are parts of the concentric circle formed by one of protrusions 64, the parts of the circular arcs of the largest concentric circle may also be parts of the circular arcs of the concentric circle formed by one of depressions 66, or may also be parts of circular arcs of a concentric circle positioned between protrusion 64 and depression 66 adjacent each other.

Additionally, although the present embodiment has been described in relation to the example where liquid crystal 18 whose refractive index changes when a voltage is applied to liquid crystal 18 (when liquid crystal 18 is energized) is provided, the present invention is not limited to this embodiment. For example, the present invention may also be applicable to glasses as en eyewear in which liquid crystal 18 is not provided, a lens, and a lens blank for the glasses.

While the present invention has been described in relation to one embodiment hereinabove, it is naturally understood that the present invention is not limited to the embodiment and can be implemented while variously modified within the scope and spirit of the present invention.

The present patent application claims the benefit of priority based on Japanese Patent Application No. 2016-191870 filed on September 29, 2016. The disclosure of the specification of the Japanese Patent Application is incorporated in the specification of the present application in its entirety.

### Reference Signs List

- 10: Electronic glasses (eyewear)
- 12: Lens
- 14: Lens
- 16: Frame
- 18: Liquid crystal (refractive index changing portion)
- 20: Liquid crystal driving part
- 52: Lens blank
- 58: Blank body
- 60: Diffraction part (Fresnel lens portion)
- 64: Protrusion
- 64A: Tip of protrusion in protruding direction
- L1: Line corresponding to tip of protrusion in protruding direction
- 66: Depression
- 66A: Bottom of depression in depressed direction
- L2: Line corresponding to bottom of depression in depressed direction
- 68: Lens body
- 70A: Upper edge of peripheral edge (second peripheral edge)
- 70B: Lower edge of peripheral edge (second peripheral edge)
- 70C: Right edge of peripheral edge (first peripheral edge)
- 70D: Left edge of peripheral edge (first peripheral edge)
- 80: Bent portion

## Claims

1. A lens, comprising:
a lens body; and
a Fresnel lens portion provided in the lens body, the Fresnel lens portion being a portion in which a plurality of protrusions and depressions are formed, the plurality of protrusions and depressions forming at least a part of a plurality of concentric circles, wherein:
the Fresnel lens portion as seen in a direction in which light enters the lens body has a laterally-elongated external shape,
at least a part of first peripheral edges of the Fresnel lens portion forms a circular arc along one of the plurality of concentric circles, the first peripheral edges being positioned at both edges of the Fresnel lens portion in a longitudinal direction of the Fresnel lens portion, and
second peripheral edges of the Fresnel lens portion are positioned inside the one of the plurality of concentric circles which includes the circular arc formed by the part of the first peripheral edges, the second peripheral edges being positioned at both edges of the Fresnel lens portion in a transverse direction of the Fresnel lens portion and being connected, via a bent portion, to the part of the first peripheral edges forming the circular arc.

2. The lens according to claim 1, wherein each of the second peripheral edges has a shape of a straight line or a curve.

3. The lens according to claim 2, wherein the second peripheral edges are formed to cross the plurality of concentric circles to which circular arcs formed by the plurality of protrusions and depressions belong.

4. The lens according to any one of claims 1 to 3, wherein the one of the plurality of concentric circles including the circular arc formed by the part of the first peripheral edges is a largest circle among the plurality of concentric circles included in the Fresnel lens portion.

5. The lens according to any one of claims 1 to 4, wherein the Fresnel lens portion includes a refractive index changing portion whose refractive index changes when the refractive index changing portion is energized.

6. The lens according to claim 5, wherein the refractive index changing portion is a liquid crystal.

7. The lens according to any one of claims 1 to 6, wherein the first peripheral edge of the Fresnel lens portion is provided with a plurality of portions respectively forming circular arcs along the one of the plurality of concentric circles.

8. The lens according to claim 7, wherein the plurality of portions respectively forming the circular arcs along the one of the plurality of concentric circles are positioned on a same circle.

9. The lens according to claim 8, wherein the plurality of portions respectively forming the circular arcs along the one of the plurality of concentric circles are disposed opposite in pairs relative to a center of the plurality of concentric circles.

10. The lens according to claim 1, wherein the Fresnel lens portion has a substantially barrel-like external shape.

11. The lens according to claim 1, wherein the Fresnel lens portion has a size in the transverse direction, the size gradually increasing toward a central portion of the Fresnel lens portion in the longitudinal direction.

12. The lens according to claim 1, wherein the longitudinal direction is a horizontal direction in a state where the lens is used, and the transverse direction is a vertical direction in the state where the lens is used.

13. A lens blank for the lens according to any one of claims 1 to 12, the lens blank comprising:
a blank body; and
the Fresnel lens portion provided in the blank body.

14. An eyewear, comprising:
a frame to be worn by a user; and
the lens according to any one of claims 1 to 12 supported by the frame.

15. The eyewear according to claim 14, wherein:
the Fresnel lens portion of the lens includes a refractive index changing portion whose refractive index changes when the refractive index changing portion is energized, and
the eyewear further comprises a controller to be attached to the frame, the controller being configured to control the refractive index changing portion, the eyewear having a function of changing a focal length of the lens.
